# EUROPEAN PATENT APPLICATION

(11) **EP 4 779 833 A1**
(43) Date of publication of application: **22.07.2026**
(21) Application number: 25223173.3
(22) Date of filing: 12.12.2025
(51) Int. Cl.: H02J 3/32, F24F 11/46, H02J 4/20, H02J 7/82, H02J 7/90

(54) **SYSTEM AND METHOD FOR CONTROLLING A CHARGE OR DISCHARGE RATE OF A BATTERY PACK, COUPLED WITH GRID POWER, UTILIZED FOR POWER OPERATION OF AIR CONDITIONING SYSTEMS**

(30) Priority: 18.12.2024 US 202463735394 P
(71) Applicant: Carrier Corporation, Palm Beach Gardens, FL 33418 (US)
(72) Inventor: WANG, Ligong, East Syracuse, 13057 (US); KIM, HanJong, Palm Beach Gardens, 33481 (US); ROTHERT, Martin, Palm Beach Gardens, 33481 (US)
(74) Representative: Dehns

(57) **Abstract**

An air conditioning system (700) having: a controller (220); an energy storage device (240) including a battery pack (1010), wherein the energy storage device (240) is operable to power the air conditioning system (700); and an AC power bus (305) for connecting the air conditioning system (700) to an AC power grid (302) to selectively charge the battery pack; wherein the controller (220) is configured to: receive a request to charge or discharge the battery pack (1010) within a time window; determine whether the battery pack (1010) will remain within a predetermined operating temperature range while being charged or discharged within the time window, and responsive to a determination, either charging or discharging the battery pack (1010), pursuant to the request, or denying the request.

## Description

### BACKGROUND

The embodiments described herein relate to air conditioning systems and more specially to a system and method for controlling a charge or discharge rate of a battery pack, coupled with grid power, utilized for power operation of air conditioning systems.

Electrical energy drives a myriad of devices and equipment in commercial, industrial, residential applications, and data centers. For example, electrical energy drives lights, motors, household appliances, medical equipment, computers, air conditioning systems, electric vehicle charging stations, data centers processing and cooling needs, and many other electrical devices. In most areas, power utilities generate and distribute electricity through an AC power grid. Shortages and/or increased costs associated with the use of fossil fuels, intermittency of renewable resources, power demand and supply variabilities, and increased demand of energy, among others factors, significantly impact the continuous availability and cost of electricity to consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy, or wind variability, if the power from the grid comes from wind turbines. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons, including maintenance. During these times of lost power, the sites may be unable to continue operations. Moreover, increasing numbers of data centers significantly add to the demand of energy from the grid.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, data centers and residential applications typically draw power from the power grid during times of peak demand, despite the higher costs associated with its generation.

Some energy consumers, such as commercial, industrial, data centers, and residential users may be driven by factors other than cost, such as a desire to support sustainable energy options as further described below.

### SUMMARY

Disclosed is an air conditioning system including: a controller; an energy storage device including a battery pack, wherein the energy storage device is operable to power the air conditioning system; and an AC power bus for connection the air conditioning system to an AC power grid to selectively charge the battery pack; wherein the controller is configured to: receive a request to charge or discharge the battery pack within a time window; determine whether the battery pack will remain within a predetermined operating temperature range while being charged or discharged within the time window, and responsive to a determination, either charging or discharging the battery pack, pursuant to the request, or denying the request.

Optionally, the controller is configured to determine a current temperature of the battery pack and determine a temperature rise from requirements associated with the request to charge or discharge the battery pack to deny the charge or discharge request upon determining that the battery pack will exceed the predetermined operating temperature range while being charged or discharged within the time window.

Optionally, the controller is configured to determine a current battery temperature by communicating with an energy storage device management system that is operationally coupled to the battery pack.

Optionally, the controller is configured to determine a highest charge or discharge rate that would maintain a temperature of the battery pack within a predetermined operational temperature range and the charge or discharge time within the requested range, and delaying the charging or discharging upon determining there is insignificant time to charge or discharge the battery pack at the highest charge or discharge rate while maintaining the temperature of the battery pack within the predetermined operational temperature range.

Optionally, the controller is configured to determine, while charging or discharging the battery pack, that there is insufficient time to meet requirements in the request, and stopping the charging or discharging.

Optionally, the controller is configured to determine, while charging or discharging the battery pack, that the temperature rise in the battery pack would exceed the predetermined operating temperature range, and stopping the charging or discharging.

Optionally, the controller is configured to determine, while charging or discharging the battery pack, that there is insufficient time to meet the charging or discharging requirements in the request, and modifying the charging or discharging to meet the requirements in the request within the time window identified in the request.

Optionally, the controller is configured to determine, while charging or discharging the battery pack, that the battery pack will exceed the predetermined operating temperature range, and modifying the charging or discharging to meet requirements in the request while keeping the battery pack within the predetermined operating temperature range.

Optionally, the controller is configured to continuously monitor a current temperature of the battery pack throughout the charging or discharging of the battery pack for determining whether to stop the charging or discharging of the battery pack.

Optionally, the battery pack is liquid cooled or air cooled during charging or discharging to maintain the predetermined operational temperature range of the battery pack.

Disclosed is a method of controlling a charging or discharging a battery pack of an energy storage device that powers an air conditioning system, the method including: receiving, by a controller of the air conditioning system, a request to charge or discharge the battery pack of the energy storage device within a time window; determining, by the controller, whether the battery pack will remain within a predetermined operating temperature range while being charged or discharged within the time window; and responsive to a determination, the controller either charging or discharging the battery pack, pursuant to the request, or denying the request.

Optionally, the method includes determining, by the controller, a current temperature of the battery pack; determining, by the controller, a temperature rise from requirements associated with the request to charge or discharge the battery pack; and denying, by the controller, the charge or discharge request upon determining that the battery pack will exceed the predetermined operating temperature range while being charged or discharged within the time window.

Optionally, the method includes determining, by the controller, a current battery temperature by communicating with an energy storage device management system that is operationally coupled to the battery pack.

Optionally, the method includes determining, by the controller, a highest charge or discharge rate that would maintain a temperature of the battery pack within a predetermined operational temperature range and the charge or discharge time within the requested range; and delaying the charging or discharging upon determining there is insignificant time to charge or discharge the battery pack at the highest charge or discharge rate while maintaining the temperature of the battery pack within the predetermined operational temperature range.

Optionally, the method includes determining, by the controller, while charging or discharging the battery pack, that there is insufficient time to meet requirements in the request, and stopping the charging or discharging.

Optionally, the method includes determining, by the controller, while charging or discharging the battery pack, that the temperature rise in the battery pack would exceed the predetermined operating temperature range, and stopping the charging or discharging.

Optionally, the method includes determining, by the controller, while charging or discharging the battery pack, that there is insufficient time to meet the charging or discharging requirements in the request, and modifying the charging or discharging to meet the requirements in the request within the time window identified in the request.

Optionally, the method includes determining, by the controller, while charging or discharging the battery pack, that the battery pack will exceed the predetermined operating temperature range, and modifying the charging or discharging to meet requirements in the request while keeping the battery pack within the predetermined operating temperature range.

Optionally, the method includes continuously monitoring, by the controller, a current temperature of the battery pack throughout the charging or discharging of the battery pack for determining whether to stop or modify the charging or discharging of the battery pack.

Optionally, the method includes controlling, by the controller, cooling of the battery pack via liquid cooling or air cooling while charging or discharging the battery pack to maintain the battery pack within the predetermined operating temperature range.

### BRIEF DESCRIPTION OF THE DRAWINGS

The invention is illustrated by way of example and not limited in the accompanying figures in which like reference numerals indicate similar elements.
FIG. 1 depicts a system in an example embodiment.
FIG. 2 depicts a controller in an example embodiment.
FIG. 3A depicts an electrical architecture in an example embodiment.
FIG. 3B depicts an electrical architecture in an example embodiment.
FIG. 4A depicts an electrical architecture in an example embodiment.
FIG. 4B depicts an electrical architecture in an example embodiment.
FIG. 5A depicts an electrical architecture for a fixed speed compressor having a DC architecture in an example embodiment.
FIG. 5B depicts an electrical architecture for a fixed speed compressor having an AC architecture in an example embodiment.
FIG. 5C depicts an electrical architecture for a variable speed compressor having a DC architecture in an example embodiment.
FIG. 5D depicts an electrical architecture for a variable speed compressor having an AC architecture in an example embodiment.
FIG. 6 depicts an electrical architecture for a compressor powered by a multilevel inverter in an example embodiment.
FIG. 7 depicts one phase leg of a five level, multiphase inverter in an example embodiment.
FIG. 8 depicts communication between a controller, a thermostat and a remote system in an example embodiment.
FIG. 9 depicts a control process in an example embodiment.
FIG. 10 depicts an electrical architecture of an air conditioning system supporting backup power modes in an example embodiment.
FIG. 11 depicts a first backup power mode in an example embodiment.
FIG. 12 depicts a second backup power mode in an example embodiment.
FIG. 13 depicts a control process for backup power operation in an example embodiment.
FIG. 14 depicts additional aspects of an air conditioning system in an example embodiment.
FIG. 15 is a flowchart showing a method of controlling a discharge rate of a battery pack utilized for backup power operation of self-powered air conditioning systems in an example embodiment.
FIG. 16 is another flowchart of method of controlling the charging or discharging of the battery pack of the energy storage device that powers the air conditioning system in an example embodiment.

### DETAILED DESCRIPTION

With current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to an air conditioning system that includes electrical energy storage systems (e.g., batteries, supercapacitors) to provide a level of dispatchability needed to interconnect with the electrical power grid.

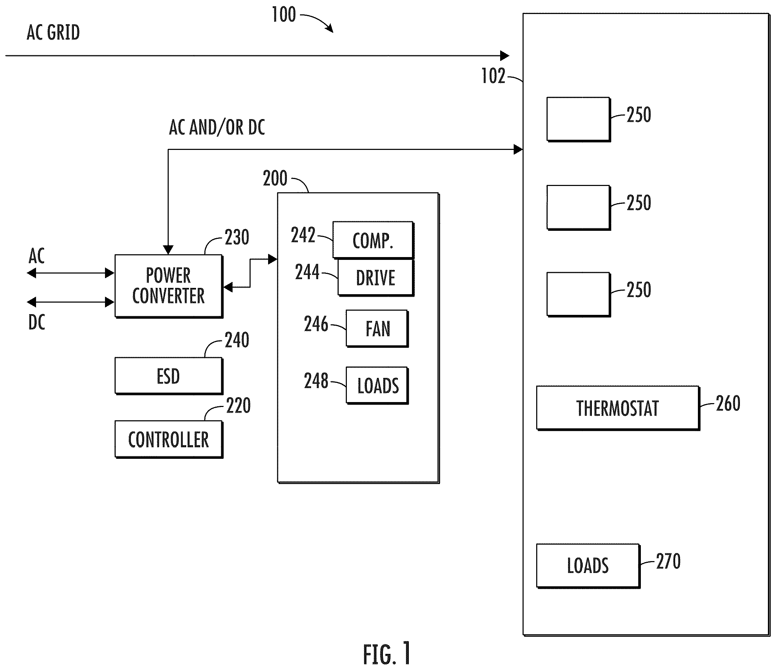

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor.

The controller 220 may communicate with an air conditioning controller system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid, powered solely by the energy storage device 240, and powered by both the AC power grid and the energy storage device 240, in conjunction. The one or more components of the air conditioning system include components in the first unit 200, components in the second unit 250.

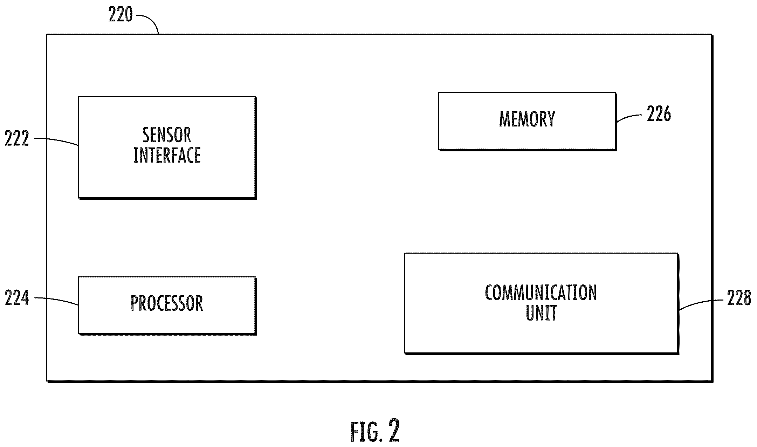

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, supercapacitor, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

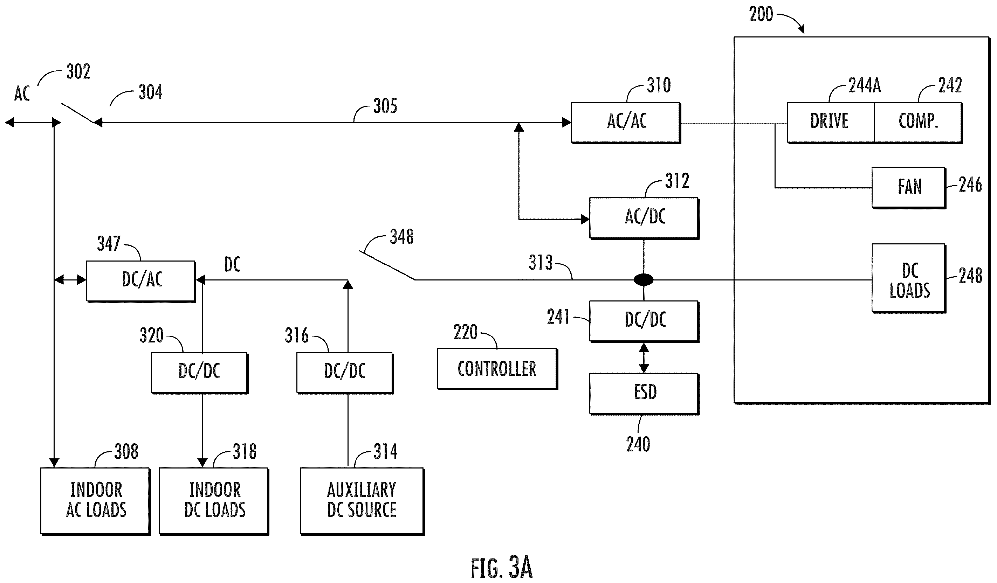

FIG. 3A depicts an electrical architecture in an example embodiment. The location of components in FIG. 3A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

As shown in FIG. 3A, an AC power grid 302 is connected to the first unit 200 through a grid disconnect 304, which is under control of the controller 220. This allows the first unit 200 to be powered by the energy storage device 240, independent of the AC power grid 302. The first unit 200 may also be powered by both the AC power grid 302 and the energy storage device 240 in conjunctions. The disconnect 304 may also be implemented as a mechanical switch controlled, for example by controller 220 or in software by the controller 220 by controlling one or more power converters.

The AC power grid 302 is connected to indoor AC loads 308 (such as an air handler, or any fixture in residential, commercial, industrial buildings or data centers). The AC power grid 302 is also provided to an AC/AC converter 310 which supplies conditioned AC power to a compressor drive 244A of the compressor 242 and the fan 246. The AC/AC converter 310 may control the amplitude, frequency, phase, etc. of AC power provided to the compressor drive 244A of the compressor 242 and the fan 246.

The AC power grid 302 may also be connected to one of a unidirectional or a bi-directional AC/DC converter 312 which interfaces the AC power bus 305 with a DC power bus 313. The DC power bus 313 supplies power to the DC loads 248, which may be located in the first unit 200. Under certain conditions, the DC power bus 313 supplies power to the one or more of components of the air conditioning system (e.g., compressor 242 and fan 246) through the bi-directional AC/DC converter 312 and the AC/AC converter 310. This allows the one or more of components of the air conditioning system to operate independent of, or in conjunction with, the AC power grid 302. The bi-directional AC/DC converter 312 also allows power from the DC bus 313 to be directed to the AC power grid 302.

The DC power bus 313 may be powered by the energy storage device 240. In charging mode, the DC power bus 313 is used to charge the energy storage device 240 (charger not shown). The DC power bus 313 may also be powered by one or more auxiliary DC sources 314, such as solar DC power, wind DC power, geothermal DC power, fuel cells, etc. A DC/DC converter 316 may be used to couple the auxiliary DC sources 314 to the DC power bus 313. The DC power bus 313 may provide power to indoor DC loads 318. A DC/DC converter 320 may be used to couple the indoor DC loads 318 to the DC power bus 313. A DC/AC converter 347 may be used to couple the DC power bus 313 to indoor AC loads 308 through a disconnect 348. In some operating modes, the energy storage device 240 is used to power indoor AC loads 308. The AC/AC converter 310, the AC/DC converter 312, the DC/DC converter 320, the DC/DC converter 316 and the DC/AC converter 347 may be implementations of the power converter 230 in FIG. 1. In some embodiments, the one or more auxiliary DC sources 314 are connected to the AC power bus 305 through a DC/AC converter (not shown). In other embodiments, the one or more auxiliary power sources provide AC power, which is connected to the AC bus 305 and/or the DC bus 313 through an appropriate AC/AC converter or AC/DC converter.

The compressor drive 244A may be implemented in a variety of manners. In one embodiment, the compressor drive 244A is a switch, such as a contactor or relay, that connects the compressor 242 to the output of the AC/AC converter 310. In other embodiments, the compressor drive 244A may be a power converter, such as an AC/AC converter or an AC/DC converter.

An optional DC/DC converter 241 may provide power conversion between the energy storage device 240 and the DC power bus 313. The DC/DC converter 241 may be a bi-directional converter used to step up or step down a DC voltage so that the energy storage device 240 can power the DC power bus 313 and the DC power bus 313 can charge the energy storage device 240. The DC/DC converter 241 may be part of the energy storage device 240 or may be a separate component from the energy storage device 240.

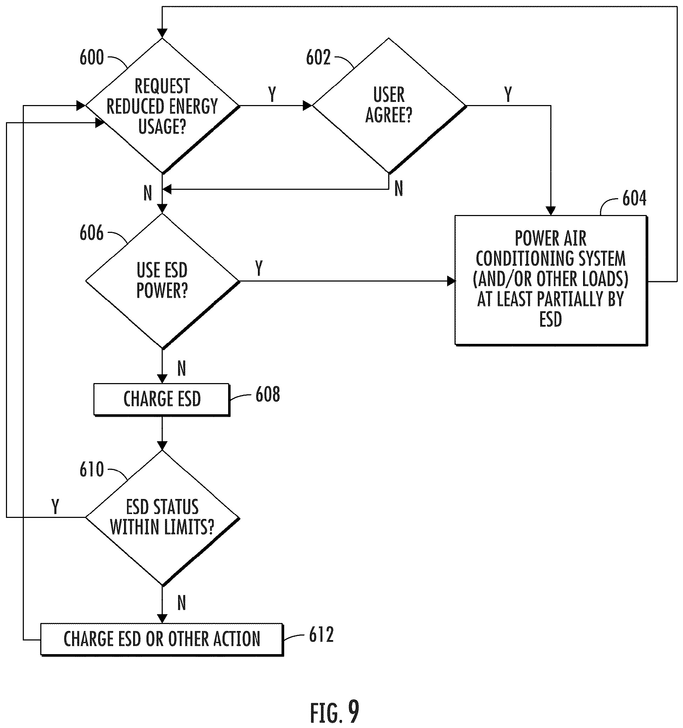

The electrical architecture of FIG. 3A allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

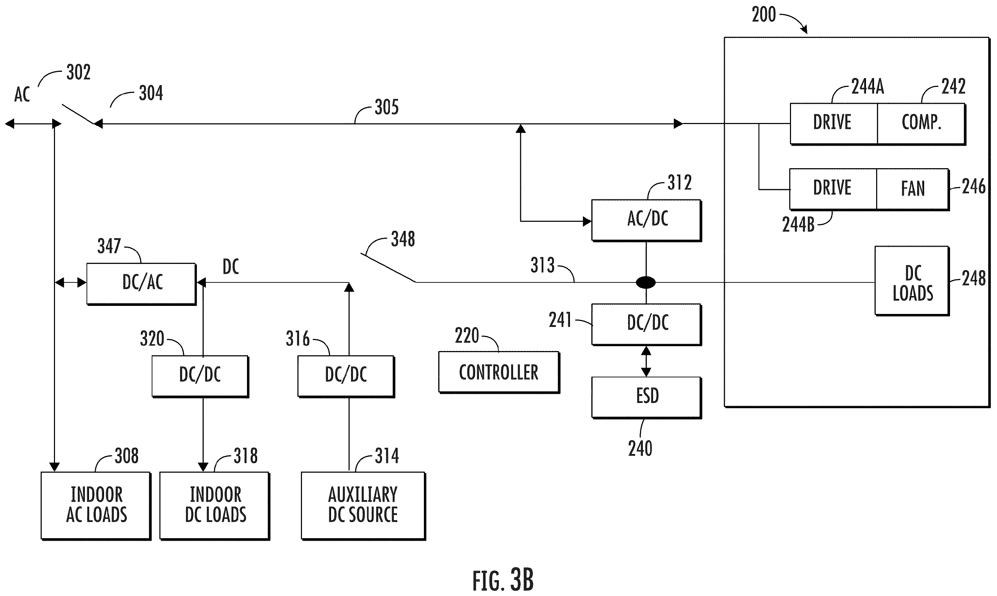

FIG. 3B depicts an electrical architecture in an example embodiment. The location of components in FIG. 3B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

FIG. 3B is similar to FIG. 3A, with the exception that the AC/AC converter 310 is eliminated. The compressor 242 is provided power from a compressor drive 244A. The compressor drive 244A may be a switch, such as a contactor or relay, that connects the compressor 242 to the AC power bus 305. In other embodiments, the compressor drive 244A may be a power converter, such as an AC/AC converter or an AC/DC converter. The compressor drive 244A may be controlled by the controller 220.

The fan 246 is provided power from a fan drive 244B. The fan drive 244B may be a switch, such as a contactor or relay, that connects the fan 246 to the AC power bus 305. In other embodiments, the fan drive 244B may be a power converter, such as an AC/AC converter or an AC/DC converter. The fan drive 244B may be controlled by the controller 220.

The electrical architecture of FIG. 3B allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

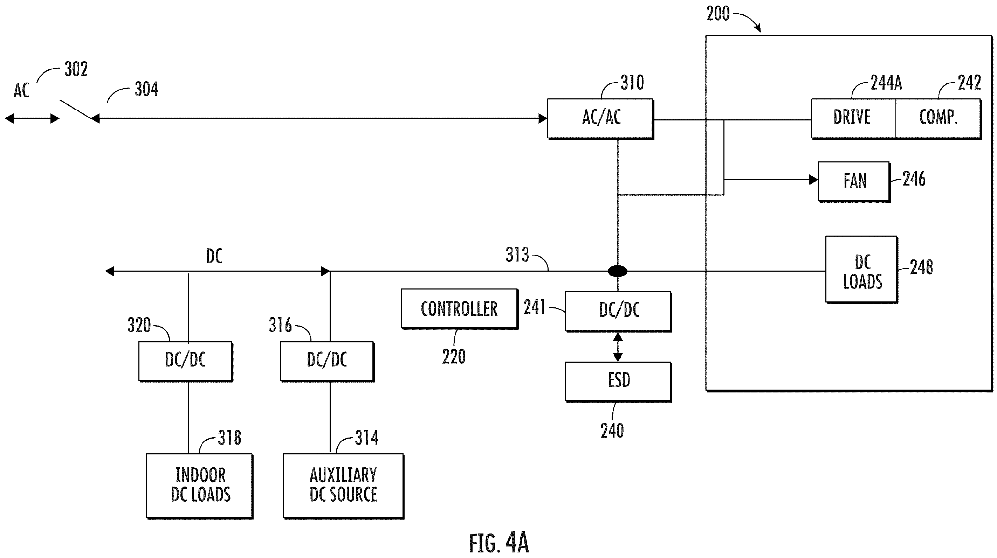

FIG. 4A depicts an electrical architecture in another example embodiment. The location of components in FIG. 4A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

In FIG. 4A, the compressor drive 244A and the fan 246 are DC powered, and as such, there is no need for the AC/AC converter 310. The bi-directional AC/DC converter 312 allows the energy storage device 240 to supply power to one or more components of the air conditioning system and/or feed power from the DC bus 313 to the AC power grid 302, under certain conditions. The bi-directional AC/DC converter 312 interfaces the AC power bus 305 with a DC power bus 313.

The compressor drive 244A may be a switch, such as a contactor or relay, that connects the compressor 242 to the DC power bus 313. In other embodiments, the compressor drive 244A may be a power converter, such as a DC/AC converter or a DC/DC converter. The compressor drive 244A may be controlled by the controller 220.

The electrical architecture of FIG. 4A allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

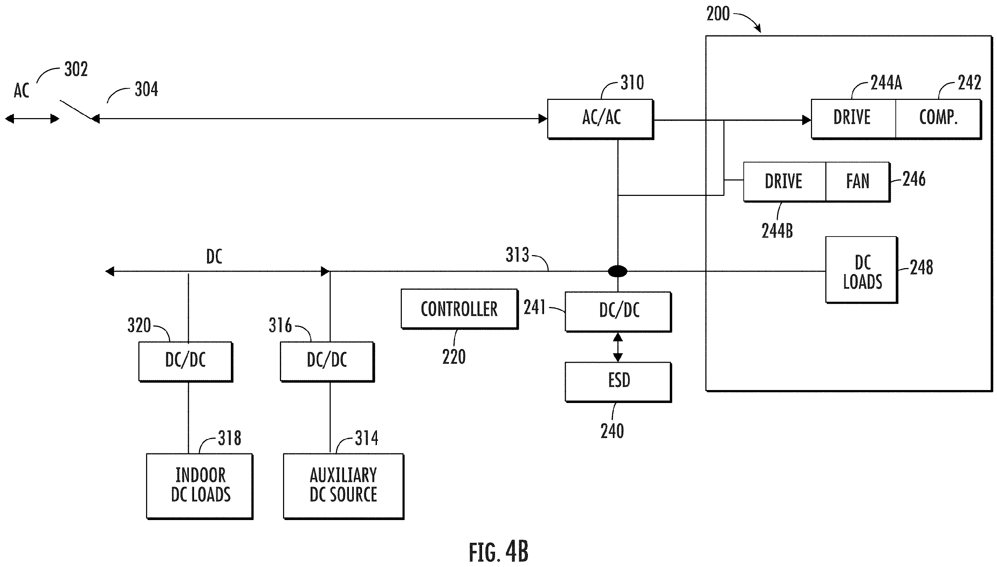

FIG. 4B depicts an electrical architecture in another example embodiment. The location of components in FIG. 4B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

FIG. 4B is similar to FIG. 4A, with the exception that the fan 246 includes a fan drive 244B. The fan drive 244B may be a switch, such as a contactor or relay, that connects the fan 246 to the DC power bus 313. In other embodiments, the fan drive 244B may be a power converter, such as a DC/AC converter or a DC/DC converter. The fan drive 244B may be controlled by the controller 220.

The electrical architecture of FIG. 4B allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

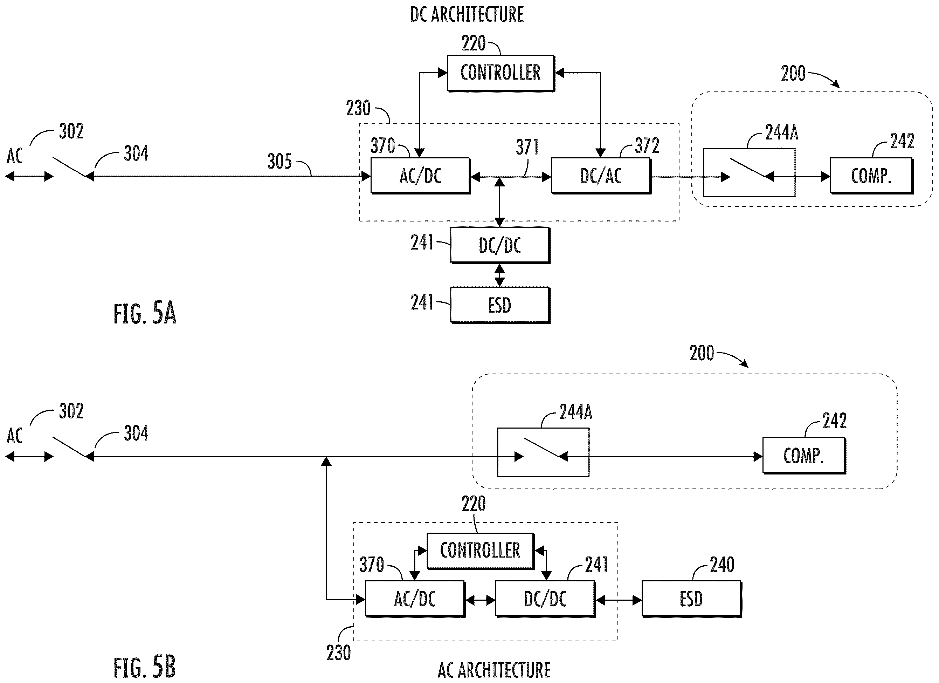

FIG. 5A depicts a DC electrical architecture for a fixed speed first unit 200 in an example embodiment. The location of components in FIG. 5A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240. As shown in Figure 5A, AC power from the AC power grid 302 is supplied through the grid disconnect 304 to a power converter 230. The power converter 230 includes an AC/DC converter 370 and a DC/AC converter 372. The output of the DC/AC converter 372 is provided to the compressor 242, through a compressor drive 244A. As the compressor 242 is fixed speed, the compressor drive 244A may be a switch, such as a contactor or relay.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, DC\DC converters 320 and 316, and DC/AC converter 347, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 5A allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5B depicts an AC electrical architecture for a fixed speed first unit 200 in an example embodiment. The location of components in FIG. 5B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

In FIG. 5B, the power converter 230 includes a DC/DC converter 241 coupled to the energy storage device 240 and an AC/DC converter 370. The AC/DC converter 370 may be bi-directional to allow the energy storage device 240 to provide power to, and be charged from, the AC power grid 302. As the compressor 242 is fixed speed, the compressor drive 244A may be a switch, such as a contactor or relay.

The controller 220, the power converter 230, the energy storage device 240 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

The electrical architecture of FIG. 5B allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

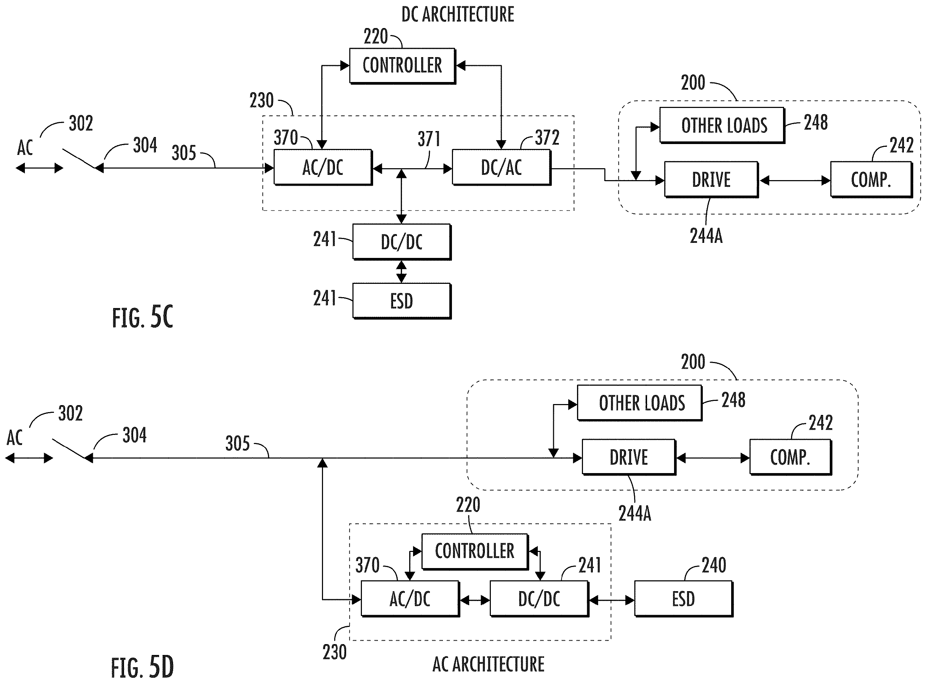

FIG. 5C depicts a DC electrical architecture for a variable speed first unit 200 in an example embodiment. The location of components in FIG. 5C is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

FIG. 5C is similar to FIG. 5A, with the exception that the compressor drive 244A provides for variable speed operation of the compressor 242. Other loads 248 of the first unit 200 may be powered from the output of the DC/AC converter 372.

The controller 220, the power converter 230, the energy storage device 240 and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The electrical architecture of FIG. 5C allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5D depicts an AC electrical architecture for a variable speed first unit 200 in an example embodiment. The location of components in FIG. 5D is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

FIG. 5D is similar to FIG. 5B, with the exception that the compressor drive 244A provides for variable speed operation of the compressor 242. Other loads 248 of the first unit 200 may be powered from the AC power bus 305.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The controller 220, the power converter 230 and the energy storage device 240 may be retrofit to an existing first unit 200. This allows the energy storage device 240 to be added to existing air conditioning systems to enable the first unit 200 to operate independent of the AC power grid 302 or operate under power from both the AC power grid and the energy storage device 240.

The electrical architecture of FIG. 5D allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

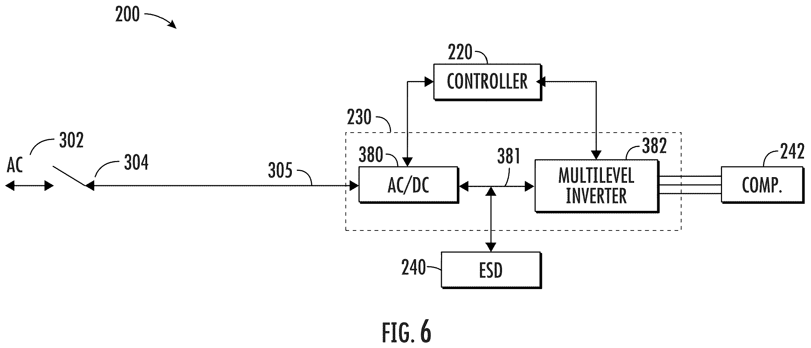

FIG. 6 depicts an electrical architecture having a variable speed compressor drive including a multilevel inverter in an example embodiment. Not all components of the first unit 200 are shown for ease of illustration and explanation. The location of components in FIG. 6 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor.

As shown in FIG. 6, AC power from the AC power grid 302 is supplied through the grid disconnect 304 to power converter 230. The power converter 230includes an AC/DC converter 380 and a multilevel inverter 382. The output of the multilevel inverter 382 is provided to the compressor 242. The output of the multilevel inverter 382 may be a multi-phase, multi-level waveform configured to drive a multi-phase motor of the compressor 242. In an example embodiment, the multilevel inverter 382 is a five-level, three phase inverter. In another example embodiment, the multilevel inverter 382 is a three-level, three phase inverter.

The multilevel inverter 382 synthesizes a sinusoidal current waveform to run and control the compressor 242. This is done traditionally by a two-level inverter. Integration with the energy storage device 240 allows for a natural progression to higher order inverters. Three and five level inverters require independent power supplies to set the voltage levels. In the embodiment of FIG. 6, the energy storage device 240 can set the voltage levels. The energy storage device 240 may include internal battery modules connected in series. The multilevel inverter 382 directly uses the battery modules for each requisite voltage level thereby enabling the benefits of a multilevel inverter. The multilevel inverter 382 benefits from lower harmonic output and lower dv/dt device stresses. The multilevel inverter 382 increases reliability through the ability to reconfigure to a lower number of levels after a fault has occurred, through the integration of back-to-back switches or relays, connecting or disconnecting battery modules together.

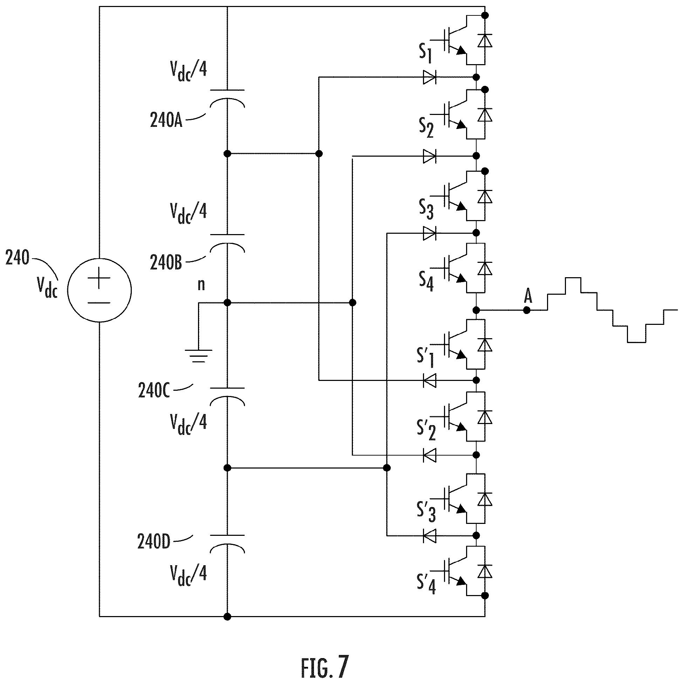

FIG. 7 shows one phase leg of a five level, multiphase inverter in an embodiment of the multilevel inverter 382. The energy storage device 240 includes at least four battery modules 240A, 240B, 240C and 240D, connected in series. The combination of the battery modules 240A, 240B, 240C and 240D, and a neutral point, n, provides the five voltage levels used to create a sinusoidal output waveform on one phase. In general, using N battery module voltages provides for an N+1 level output waveform for each phase. Switches S1-S4 and S1'-S4' are controlled by the controller 220 to produce a sine wave as known in the art. The multilevel inverter 382 can be reconfigured to fewer levels through the integration of back-to-back switches or relays, connecting or disconnecting battery modules together.

The voltage levels used in the multilevel inverter 382 do not need to be supplied by separate battery modules. The voltage levels used to create the sinusoidal output waveform can be created using one battery module, with the battery voltage being split, for example, by capacitors.

Referring the FIG. 6, both the AC/DC converter 380 and the multilevel inverter 382 operate under the control of the controller 220. Between the AC/DC converter 380 and the multilevel inverter 382 is a DC link 381 that is connected to the energy storage device 240. Under this arrangement, energy storage device 240 may be charged by the power converter 230. Alternatively, the energy storage device 240 may provide DC power to the DC link 381 to power the multilevel inverter 382 and compressor 242. This allows the first unit 200 to operate independent of the AC power grid 302 or operate under power from both the AC power grid 302 and the energy storage device 240. The AC/DC converter 380 may be bi-directional to allow the energy storage device 240 to provide power to, and be charged from, the AC power grid.

The electrical architecture of FIG. 6 allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

In the above embodiments, one or more auxiliary DC sources 314 may be used to provide DC power. The one or more auxiliary DC sources 314, may include sources such as solar DC power, wind DC power, geothermal DC power, fuel cells, etc.

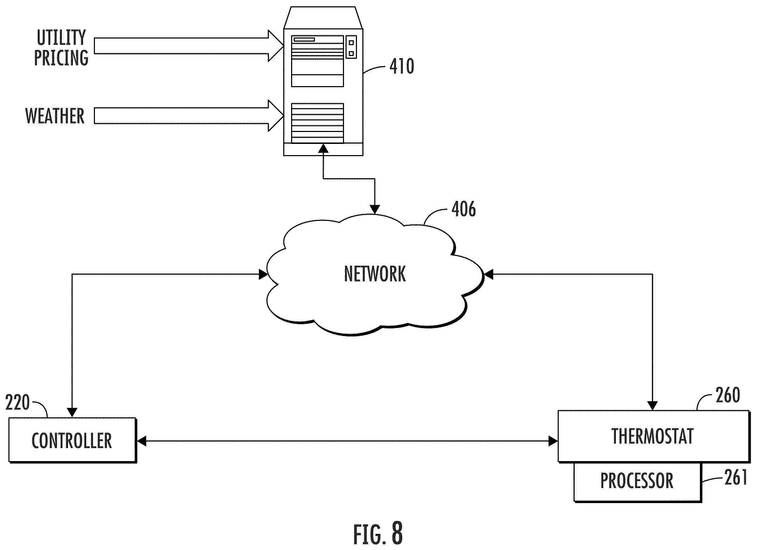

FIG. 8 depicts communication between the controller 220, the thermostat 260 and a remote system 410 in an example embodiment. As noted above, the controller 220 may be integrated as part of an air conditioning controller and/or a battery controller, or be independent and communicating to the air conditioning controller and/or energy storage controller. The controller 220 communicates with the thermostat 260 over a local link 400. The local link 400 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy, past performance, and weather information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 provides information that is used by the controller 220 and/or thermostat 260 to implement an energy management routine that controls how power is consumed by the one or more components of the air conditioning system and the loads 270. The information provided by the remote system 410 may include utility pricing, indicating the cost of electricity on the AC power grid 302 and weather information, which may be used to predict future utility pricing and usage of the one or more components of the air conditioning system. The utility pricing and weather may be pushed to, or pulled by, the remote system 410 using known networking techniques. The utility pricing and/or weather may be determined in real time or be forecasts of future conditions.

In the above-described embodiments, the controller 220 communicates with components of the described systems using wired and/or wireless connections, which are not illustrated in the drawings. Depending on the power sources used in an operation mode (e.g., one or more of AC grid power, energy storage device power, auxiliary power sources, etc.) the controller 220 sends command signals to the various system components, (for example, AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382, AC disconnect 304, etc.) to route power to one or more components of the air conditioning system, such as the first unit 200, the second unit(s) 250, along with the indoor load(s) 270, and any other loads.

FIG. 9 depicts an energy management process in an example embodiment. The process may be performed by the controller 220 and/or by the thermostat 260. At 600, the controller 220 determines if a request for a reduction in energy usage is present, or any other communication signal, such as a change in energy pricing, or an incentive. The utility provider may request a reduction in energy usage during a certain period of time to avoid a service interpretation (e.g., a brownout), or other penalty or incentive such as a change in pricing. The request for a reduction in energy usage may be accompanied by an incentive (e.g., $5 off next energy bill). The request for reduction may also originate from an energy consumer, such as a data center, where the data center needs to maintain their processing and/or cooling loads and incentivizes other users to decrease their consumption to ensure energy availability.

If a request for a reduction in energy usage is present, flow proceeds to 602 where a user (e.g., a customer of the utility) can approve or deny the request to reduce energy usage. The approve or deny determination may be pre-established by the user and pre-programmed into the controller 220 and/or the thermostat 260. For example, the user may wish to always reduce energy consumption, regardless of the terms. The user may wish to never reduce energy consumption, regardless of the terms. The user may wish to reduce energy consumption only if the utility offers an incentive. The approve or deny determination at 602 may also be in real time, where the user enters an approval or denial of reduced energy consumption through the thermostat 260 or through a mobile device.

If the user approves reduced energy usage at 602, flow proceeds to 604 where one or more components of the air conditioning system (if needed), and/or other loads, are powered, at least in part, by the energy storage device 240. This may entail opening the AC disconnect 304 (e.g., power from the AC power grid 302 is zero) and powering one or more components of the air conditioning system and/or other loads, using only the energy storage device 240. Operating one or more components of the air conditioning system and/or other loads may also include using both the AC power grid 302 and the energy storage device 240, in conjunction, to power the one or more components of the air conditioning system and/or other loads. The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. The energy storage device 240 and the AC power grid 302 are used in conjunction to power one or more components of the air conditioning system and/or one or more loads.

Operating the one or more components of the air conditioning system using the energy storage device 240 may also include limiting the amount of power used from the AC power grid 302 to a power limit (e.g., 1 kW during 2 hours). The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. At 604, other loads may be powered by the energy storage device 240, including indoor load(s) 270, which may include indoor DC load(s) 318 and/or indoor AC load(s) 308. The process returns to 600.

At some point, the energy storage device 240 will lack sufficient charge such that the one or more components of the air conditioning system will need to be powered exclusively by the AC power grid 302. The controller 220 can detect when a status, such as state of charge (SOC), state of health (SoH), voltage, temperature, etc., of the energy storage device 240 is not within acceptable limits to power the one or more components of the air conditioning system or other loads. If the status of the energy storage device 240 is not within acceptable limits, the one or more components of the air conditioning system and/or other loads need to be powered by the AC power grid 302. This results in discontinuing discharging the energy storage 240 and/or initiating charging the energy storage device 240.

If the utility, or some other source, has not requested to reduce the energy usage at 600, flow proceeds to 606 where the controller 220 determines if the system 100 should use power from the energy storage device 240. One example of a situation where the system 100 should use power from the energy storage device 240 occurs when the utility power is at least one of at a peak price, approaching a grid capacity or at the grid capacity. This determination may be made in real time or may be made previously using forecasting and communicated to the air conditioning system from the utility. Peak price does not necessarily require that the price for electricity be at a maximum, but is generally known in the art as a period of higher than average energy costs. Whether the utility is at a peak price may be determined by utility pricing obtained from the remote system 410 or current or future weather information obtained from the remote system 410. This information may also be locally stored at controller 220. If the utility is at least one of at a peak price, approaching a grid capacity or at the grid capacity, flow proceeds to 604 where the one or more components of the air conditioning system and loads 270, including indoor AC loads 308 and/or other loads are powered by the energy storage device 240 alone or in conjunction with the AC power grid 302. The controller 220 can limit the amount of power drawn from the AC power grid 302 by controlling the various power converters 230 in the system, as noted above. The utility power at a peak price and grid capacity are not the only factors that may be relied on in determining that the system should use power from the energy storage device 240.

With respect to grid capacity, information regarding the grid capacity and current grid load can be obtained from a remote system, such as the source of the utility pricing. If the AC power grid 302 is at grid capacity or approaching grid capacity (e.g., within a threshold range of grid capacity and, optionally, increasing), then it may be prudent to use power from the energy storage device 240 to avoid a power disruption.

Another example of a situation where the system should use power from the energy storage device 240 occurs when a user requests reduced energy usage. The user may use the thermostat 260 to place the system 100 in reduced energy usage mode (e.g., eco-friendly mode) which causes the system to use power from the energy storage device 240 to power one or more components of the air conditioning system.

In another example, the system may use power from the energy storage device 240 based on machine learning (ML) and/or artificial intelligence (AI) control algorithms implemented by controller 220 based on data from block 602 (e.g., User agree), or based on data from block 600 (e.g., Request reduced energy usage).

If at 606, the system should not use power from the energy storage device 240, flow proceeds to 608 where the energy storage device 240 is charged using the AC power grid 302. At 610, the controller 220 determines if the battery status is within acceptable limits, including state of charge (SOC), state of health (SoH), temperature, voltage, or status beyond safety and/or operational limits. If yes, flow returns to 600. At 610, the controller 220 can detect parameters of the energy storage device 240, to confirm that parameters such as state of health of the battery, operating range, temperature range, voltages, capacity, etc., are within the valid limits.

It should be noted that the energy storage device 240 may be charged even if the utility power is at a peak price. This may include failure modes, test modes, etc. Thus, charging the energy storage device 240 is not limited to off-peak utility power price times.

If at 610, the energy storage device has a status that is not within acceptable limits, flow proceeds to 612 where the energy storage device 240 may be charged if the SoC is low or may be disconnected completely if the energy storage device 240 is not operating per safety and/or operational limits.

While FIG. 9 refers to operating one or more components of the air conditioning system and/or other loads to reduce power consumption, other techniques may be used to reduce power consumption, such as using a variable speed drive to reduce compressor speed, changing a thermostat set-point, etc. In other embodiments, the utility could request an increase in energy usage. This request can be a real-time or a future request based on predicted conditions. Increasing energy usage may include charging the energy storage device 240.

One or more operations of the process of FIG. 9 may be performed by the thermostat 260, if the thermostat 260 is equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat may perform all or some of the operations of FIG. 9, in conjunction or individually.

In other embodiments, the controller 220 and/or the thermostat 260 executes a system enhancement routine to improve performance of the entire air conditioning system, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating, that have an advantage on cost, performance, efficiency, environment, comfort, reliability, may be implemented by the controller 220 and/or the thermostat 260.

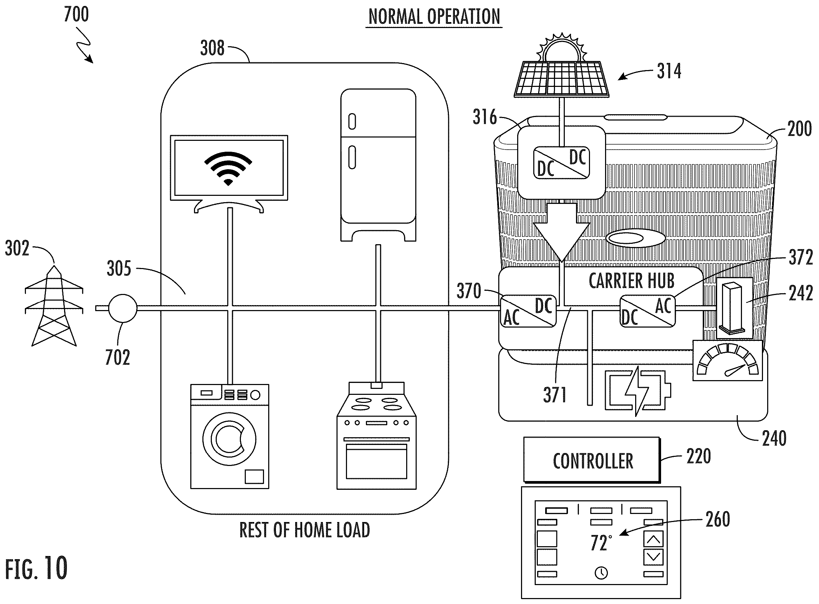

FIG. 10 depicts an electrical architecture of an air conditioning system 700 supporting backup power modes in an example embodiment. The air conditioning system 700 is connected to the AC power grid 302 through a sensor switch 702 connected to an AC power bus 305. The sensor switch 702 serves as disconnect between the AC power grid 302 and the AC power bus 305. The sensor switch 702 also monitors presence of AC power from the AC power grid 302 and monitors loads on the AC power bus 305. The sensor switch 702 may be a single smart switch, or a combination of a voltage/current sensor and a switch (e.g., a breaker or relay). The sensor switch 702 is in communication with the controller 220 via a wired and/or wireless connection. The AC power grid 302 is connected to indoor AC loads 308 on the AC bus 305.

The first unit 200 (e.g., an outdoor unit) includes a compressor 242 and a drive including an AC/DC converter 370 and a DC/AC converter 372. The output of the DC/AC converter 372 is provided to the compressor 242. Both the AC/DC converter 370 and the DC/AC converter 372 operate under the control of the controller 220. Between the AC/DC converter 370 and the DC/AC converter 372 is a DC link 371 that is connected to the energy storage device 240. Under this arrangement, energy storage device 240 may be charged by the AC power grid 302 through the AC/DC converter 370. Alternatively, the energy storage device 240 may provide DC power to the DC link 371 to power the DC/AC converter 372 and the first unit 200, including the compressor 242. This allows the first unit 200 to operate independent of the AC power grid 302. The AC/DC converter 370 may configurable into bi-directional operation, in response to a command from the controller 220, to allow the first unit 200 to feed power from the energy storage device 240 to the AC power bus 305 and indoor AC loads 308.

The DC link 371 may also be powered by one or more auxiliary DC sources 314, such as solar DC power, wind DC power, geothermal DC power, fuel cells, etc. A DC/DC converter 316 may be used to couple the auxiliary DC sources 314 to the DC link 371. The one or more auxiliary DC sources 314 may be used to power the first unit 200, including compressor 242, charge the energy storage device 240, power indoor AC loads 308 and feed power to the AC power grid 302.

FIG. 10 depicts the first unit 200 in a normal operating mode where the AC power grid 302 is available. In normal operating mode, the controller 220 provides no limits on the operating speed of the compressor 242. Further, the thermostat 260 may be set to any temperature setpoint by the user.

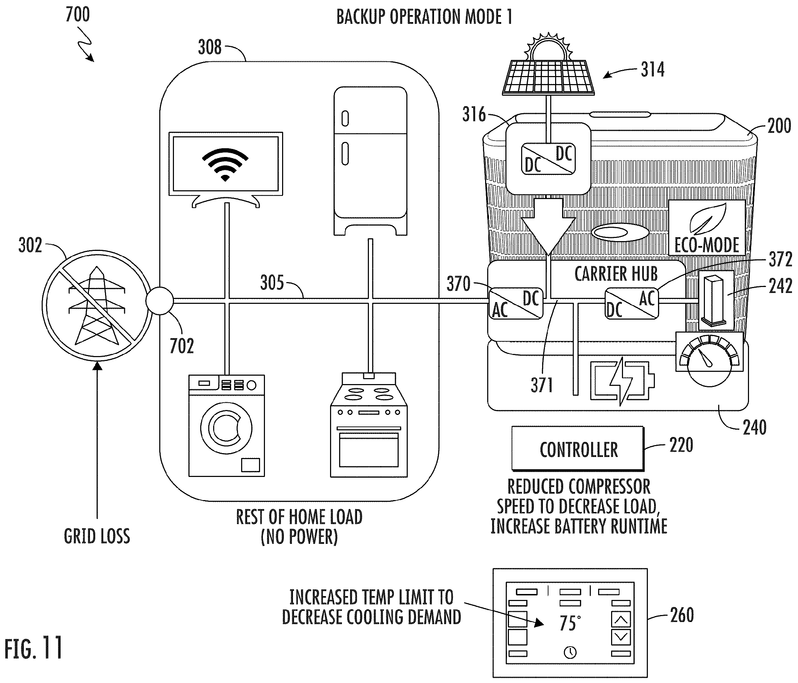

FIG. 11 depicts the air conditioning system 700 in a first backup power mode. In the FIG. 11, the AC power grid 302 is not providing power. The loss of the AC power grid 302 may be detected by sensor switch 702, which is communicated to the controller 220. In the first backup power mode, the first unit 200, including the compressor 242, is powered using the energy storage device 240 and/or the auxiliary DC sources 314 (if present). The controller 220 changes operating parameters of the air conditioning system 700 in order to increase the run time of the first unit 200, including the compressor 242. One operating parameter controlled by the controller 220 is a speed of the compressor 242. The controller 220 imposes a limit on the operating speed of the compressor 242 in order to conserve power supplied from the energy storage device 240. Another operating parameter controlled by the controller 220 is a temperature setpoint at the thermostat 260. The controller 220 may set the temperature setpoint at the thermostat 260 to a predetermined value (e.g., 75 degrees Fahrenheit), or offset a current temperature setpoint at the thermostat 260 by an offset amount (e.g., + 5 degrees Fahrenheit when in cooling mode). The controller 220 may control one or both of the operating speed of the compressor 242 and the temperature setpoint at the thermostat 260. Controlling one or both of these operating parameters reduces energy consumption of the first unit 200, including the compressor 242, and extends run time of the first unit 200 when powered by the energy storage device 240.

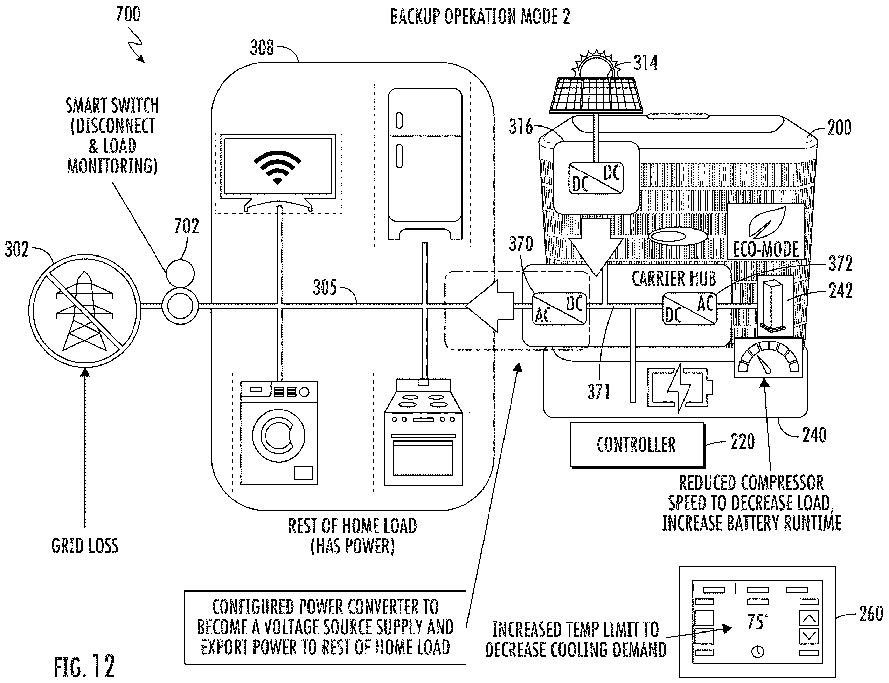

FIG. 12 depicts a second backup power mode in an example embodiment. In the FIG. 12, the AC power grid 302 is not providing power. The loss of the AC power grid 302 may be detected by sensor switch 702, which is communicated to the controller 220. In the second backup power mode, the first unit 200, including the compressor 242, is powered using the energy storage device 240 and/or the auxiliary DC sources 314 (if present). The controller 220 changes operating parameters of the air conditioning system 700 in order to increase the run time of the first unit 200, including the compressor 242. One operating parameter controlled by the controller 220 is speed of the compressor 242. The controller 220 imposes a limit on the operating speed of the compressor 242 in order to conserve power supplied from the energy storage device 240. Another operating parameter controlled by the controller 220 is a temperature setpoint at the thermostat 260. The controller 220 may set the temperature setpoint at the thermostat 260 to a predetermined value (e.g., 75 degrees Fahrenheit), or offset a current temperature setpoint at the thermostat 260 by an offset amount (e.g., + 5 degrees Fahrenheit when in cooling mode). The controller 220 may control one or both of the operating speed of the compressor 242 and the temperature setpoint at the thermostat 260. Controlling one or both of these operating parameters reduces power consumption of the first unit 200, including the compressor 242, and extends run time of the first unit 200 when powered by the energy storage device 240.

The second backup power mode also includes powering the indoor AC loads 308 using the energy storage device 240 and/or the auxiliary DC sources 314 (if present). In the second backup power mode, the controller 220 configures the AC/DC converter 370 to a bidirectional mode, so that DC power from the energy storage device 240 and/or the auxiliary DC sources 314 (if present) is converted to AC power and applied to the AC power bus 305. The controller 220 also opens the sensor switch 702 to disconnect the AC power bus 305 from the AC power grid 302. The controller 220 can monitor power consumption of the indoor AC loads 308 using smart switch 702 and prioritize supplying power to the first unit 200, including the compressor 242, over the indoor AC loads 308. For example, if the run time of the first unit 200 (based on current state of charge of the energy storage device 240) is less than a time limit (e.g., 4 hours) then the controller 220 may place AC/DC converter 370 into a unidirectional mode so that power from the energy storage device 240 is provided only to the first unit 200, and not to the indoor AC loads 308. This changes the backup power mode from the second backup power mode in FIG. 12 to the first backup power mode of FIG. 11.

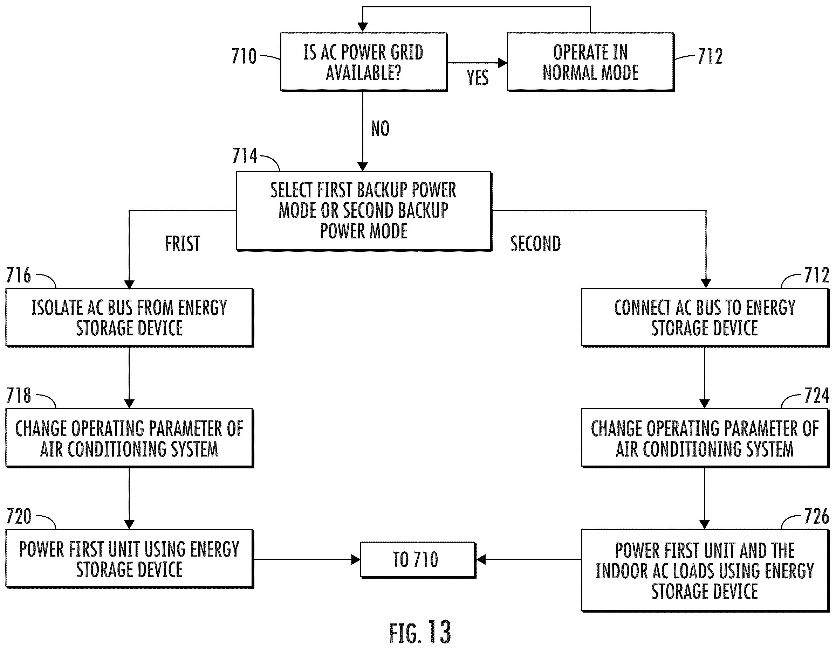

FIG. 13 depicts a control process for backup power operation of the air conditioning system 700 in an example embodiment. The control process may be implemented by the controller 220. At 710, the controller 220 determines if the AC power grid 302 is available. This may be performed by monitoring power levels sensed by the sensor switch 702. If the AC power grid 302 is available, the air conditioning system 700 operates in normal mode (as shown in FIG. 10) at 712.

If the AC power grid 302 is not available, flow proceeds to 714 where the controller 220 determines whether to operate in the first backup power mode (as shown in FIG. 11) or the second backup power mode (as shown in FIG. 12). The determination to operate in the first backup power mode or the second backup power mode may be based on energy availability of the energy storage device 240 and/or whether the one or more auxiliary DC sources 314 are present. For example, the controller 220 may determine that a state of charge of the energy storage device 240 is insufficient to power both the first unit 200, including the compressor 242, and the indoor AC loads 308. The controller 220 may determine that one or more auxiliary DC sources 314 are not present, or not providing sufficient power, to power both the first unit 200, including the compressor 242 and a fan, and the indoor AC loads 308. In these situations, the first backup power mode is selected and the process flows to 716.

At 716, the controller 220 isolates the AC bus 305 from the energy storage device 240. This may require no affirmative operation, other than confirming that the AC/DC converter 370 is a unidirectional mode, allowing only AC to DC conversion, and preventing the energy storage device 240 from powering the AC bus 305.

At 718, the controller 220 may control operating parameter(s) of the air conditioning system 700, by adjusting one or both of the operating speed of the compressor 242 and the temperature setpoint at the thermostat 260.

At 720, the first unit 200, including the compressor 242, is powered using the energy storage device 240, and one or more auxiliary DC sources 314, if present.

If at 714, the controller 220 selects the second backup power mode, flow proceeds to 722 where the controller 220 connects the energy storage device 240 to the AC power bus 305 by configuring the AC/DC converter 370 for bidirectional operation. The controller 220 opens the sensor switch 702 to disconnect the AC power bus 305 from the AC power grid 302. DC power from the energy storage device 240 is converted to AC power by the AC/DC converter 370 and applied to the AC power bus 305.

At 724, the controller 220 may control operating parameter(s) of the air conditioning system 700, by adjusting one or both of the operating speed of the compressor 242 and the temperature setpoint at the thermostat 260.

At 726, the first unit 200, including the compressor 242, and the indoor AC loads 308 are powered using the energy storage device 240, and one or more auxiliary DC sources 314, if present.

Both steps 720 and 726 may return to 710. In this way, the controller 220 can toggle between the normal mode, first backup power mode and second backup power mode, as appropriate.

The control process of FIG. 13 prioritizes powering the first unit 200, including the compressor 242, over other loads, such as indoor AC loads 308.

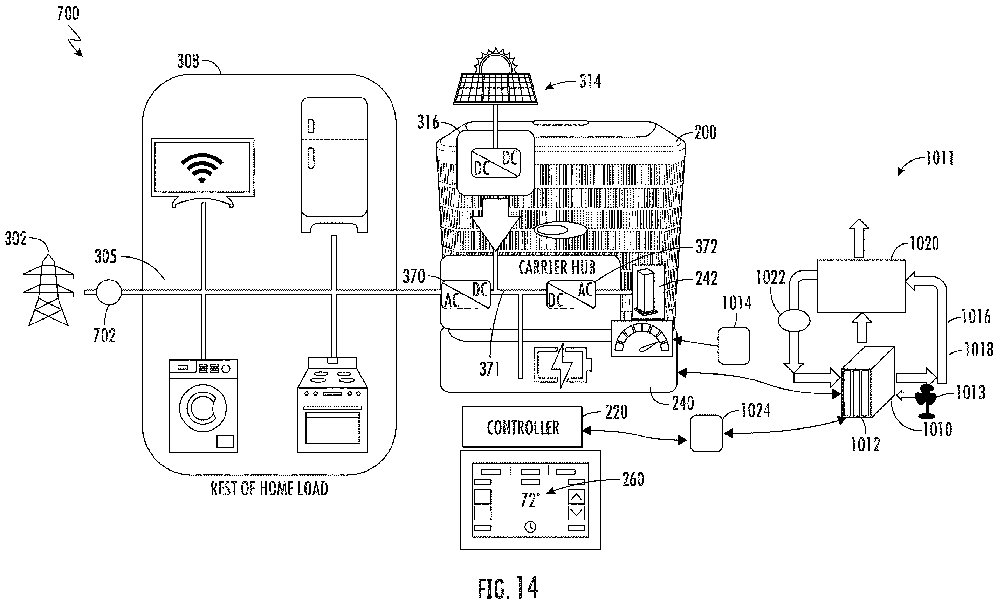

FIG. 14 is similar to FIG. 10 and depicts an electrical architecture of an air conditioning system 700 supporting backup power modes in an example embodiment. The air conditioning system 700 is connected to the AC power grid 302 through a sensor switch 702 connected to an AC power bus 305. The sensor switch 702 serves as disconnect between the AC power grid 302 and the AC power bus 305. The sensor switch 702 also monitors presence of AC power from the AC power grid 302 and monitors loads on the AC power bus 305. The sensor switch 702 may be a single smart switch, or a combination of a voltage/current sensor and a switch (e.g., a breaker or relay). The sensor switch 702 is in communication with the controller 220 via a wired and/or wireless connection. The AC power grid 302 is connected to indoor AC loads 308 on the AC bus 305.

The first unit 200 (e.g., an outdoor unit) includes a compressor 242 and a drive including an AC/DC converter 370 and a DC/AC converter 372. The output of the DC/AC converter 372 is provided to the compressor 242. Both the AC/DC converter 370 and the DC/AC converter 372 operate under the control of the controller 220. Between the AC/DC converter 370 and the DC/AC converter 372 is a DC link 371 that is connected to the energy storage device 240. Under this arrangement, energy storage device 240 may be charged by the AC power grid 302 through the AC/DC converter 370. Alternatively, the energy storage device 240 may provide DC power to the DC link 371 to power the DC/AC converter 372 and the first unit 200, including the compressor 242. This allows the first unit 200 to operate independent of the AC power grid 302. The AC/DC converter 370 may configurable into bi-directional operation, in response to a command from the controller 220, to allow the first unit 200 to feed power from the energy storage device 240 to the AC power bus 305 and indoor AC loads 308.

The DC link 371 may also be powered by one or more auxiliary DC sources 314, such as solar DC power, wind DC power, geothermal DC power, fuel cells, etc. A DC/DC converter 316 may be used to couple the auxiliary DC sources 314 to the DC link 371. The one or more auxiliary DC sources 314 may be used to power the first unit 200, including compressor 242, charge the energy storage device 240, power indoor AC loads 308 and feed power to the AC power grid 302. FIG. 14 depicts the first unit 200 in an operating mode where the AC power grid 302 is available. The thermostat 260 may be set to any temperature setpoint by the user.

According to the embodiments, the air conditioning system 700 (or system 700, for simplicity) is controlled, e.g., by the controller 220 to provide an energy infrastructure solution that meets ESG (Environmental, Social, and Governance) goals by cooperating with utility companies to optimize energy usage under GRIP (Grid Resilience and Innovation Partnerships) program, managed by the U.S. Department of Energy. The system 700 is one household appliance that consumes the most electricity and a technology suitable for the energy storage device 240 as backup power. Given its power, energy density, and cycle life, a LI (Lithium-Ion) battery pack 1010 is a suitable technology for the energy storage device 240 as backup power. The LI battery pack 1010 may be shut down before delivering desired amount of energy due to OVP (Overvoltage Protection) above 40°C (Celsius), i.e.,104F (Fahrenheit).

A battery temperature rise in the LI battery pack 1010 is proportional to discharge rate. Thus the energy storage device 240 may be controlled by the controller 220 to adopt a lower discharge rate for an extended period of discharge time with a same amount of energy output. This may keep the LI battery pack 1010 operating in a safe temperature operational temperature range. The actual discharge rate, e.g. 0.2C (degrees Celsius) vs. 0.5C, e.g., per hour is calculated based on characterization of the cells 1012 of the LI battery pack 1010, and thermal management data 1014 of the LI battery pack 1010, and adjusted by parameter changes on a real-time monitoring of battery cells 1012. Adjustments may be made utilizing a thermal management system (TMS) 1011 for the battery pack 1010, which may be liquid or air cooled, e.g., with fan 1013. FIG. 14 shows a TMS 1011 that is liquid cooled. As such, adjustments may be made based on coolant temperatures of coolant 1016 in a chiller system 1018, e.g., with a heat exchanger 1020 which may be liquid cooled as a non-limiting example, and a pump 1022, controlled by the controller 220, utilized for cooling the battery cells 1012. For example, the coolant flow, in CFMs (cubic feet per minute), e.g., may be adjusted, if the flow is not a fixed rate. The thermal management for the batteries, e.g., the chiller system 1018, and design of the ESDMS 1024, which may be a separate processor or controller coupled to the energy storage device 240, may be able to support up to 50°C (122F) operations while meeting up-to-a four-hour power backup requirement at reduced discharge rates in an improved liquid or air-cooling of the pack 1010.

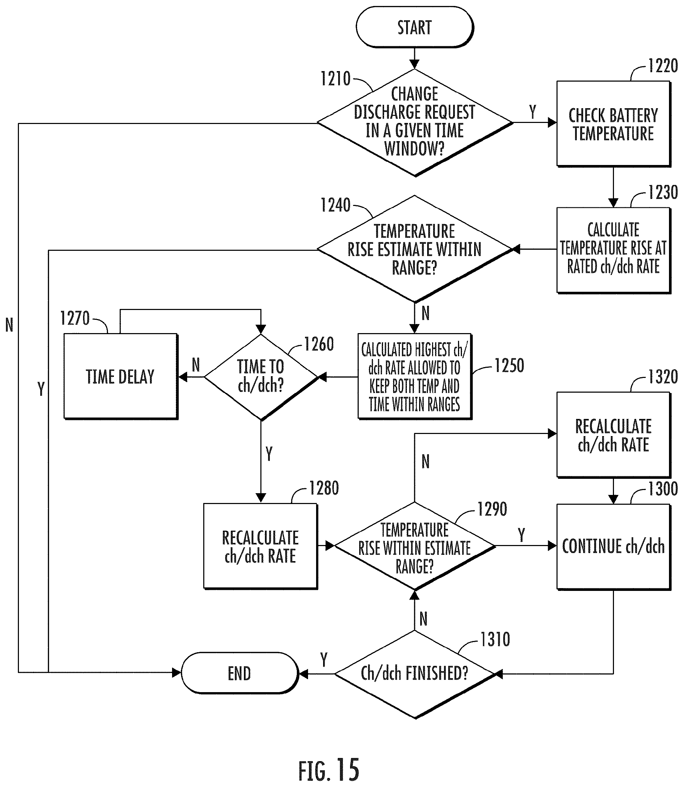

Turning to FIG. 15, a flowchart shows a method executed by the controller 220, utilizing the thermal management data 1014, to control the discharge rate, thereby controlling the heating, of the battery pack 1010. The controller 220 may thereby maintain the battery pack 1010 within a predetermined operational temperature range.

As shown in block 1210, the method includes the controller 220 determining whether it has received a charge or discharge request within a window of time, e.g., power the system 700 or recharge the battery pack 1010. While the determination is no at block 220, the process ends, i.e., the request is denied.

When the determination is yes at block 220, as shown in block 1220, the method includes the controller 220 checking the current battery temperature, e.g., by communicating with the ESDMS 1024.

As shown in block 1230, the method includes the controller 220 calculating the temperature rise in the battery pack 1010 at a rated charge or discharge based on the requirements indicated in the request.

As shown in block 1240, the method includes the controller 220 determining whether the temperature rise is within an acceptable range. While the determination is yes at block 1240, the process ends.

When the determination is no at block 1240, as shown in block 1250 the method includes the controller 220 calculating the highest charge or discharge rate that would keep the temperature of the battery pack 1010 and the charge or discharge time within the requested range. For example, depending on outside atmospheric conditions, which may be hot or cold, and the need for the battery charging or discharging, e.g., to recharge the battery pack 1010 or power the system 700 or portion thereof, the charge or discharge rate and temperature change of the battery pack 1010 may differ.

As shown in block 1260, the method includes the controller 220 determining whether there is sufficient time available for the requested charge or discharge. There may be insufficient time left for the charge if, for example, the grid load is expected to be too great during the same time window to support drawing the power required to charge the battery pack 1010. There may be insufficient time left to discharge if, for example, during the same time window, there is an expected need for high use of the system 700, e.g., requiring a greater energy output, such as during peak hours of a hot day. That is, the discharge raises the temperature of the battery pack 1010. If the ambient temperature is expected to peak in, for example, two hours following the instant request, requiring usage of the system 700 that will heat up the battery pack 1010, the instant request to discharge the battery pack 1010 may be denied to keep the battery pack 1010 at a desired cooler temperature.

As shown in block 1270 when the determination is no at block 1260, then at block 1270 the controller 220 may pause the charge or discharge of the battery pack 1010 until there is sufficient time.

As shown in block 1280 when the determination is yes at block 1250, the method includes the controller 220 starting to charge or discharge the battery pack 1010 at the calculated rate to maintain the target operating temperature.

As shown in block 1290, the method includes determining whether the temperature rise in the battery pack 1010 from the charge or discharge is within an acceptable range. If the determination at block 1290 is yes then as shown in block 1300 the charging or discharging continues. As shown in block 1310 the controller 220 continues to monitor the temperature of the battery pack 1010 (block 1290) until the requirements of the request are complete, and the process ends.

Alternatively, if the determination at block 1290 is no then at block 1320 the controller 220 recalculates a charge or discharge rage that enables the battery pack 1010 to maintain the acceptable temperature range. Then the controller 220 continues to block 1300 as indicated above. That is, the charging or discharging continues. As shown in block 1310 the controller 220 continues to monitor the temperature of the battery pack 1010 (block 1290) until the requirements of the request are complete, and the process ends.

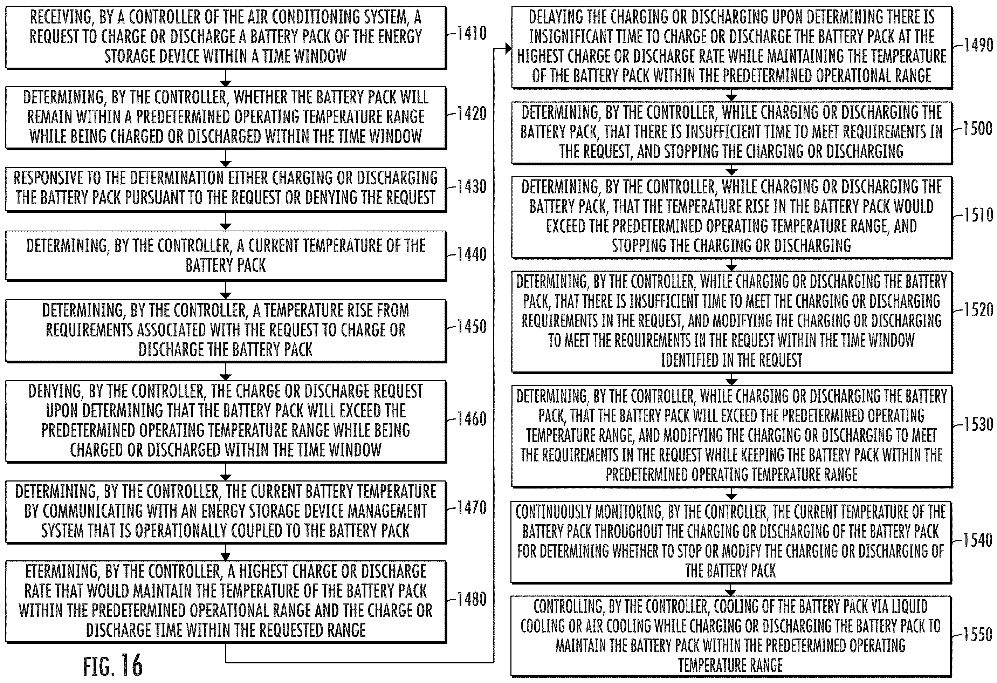

FIG. 16 is another flowchart of method of controlling the charging or discharging of the battery pack 1010 of the energy storage device 240 that powers the air conditioning system 700.

As indicated in block 1410, the method includes receiving, by a controller 220 of the air conditioning system 700, a request to charge or discharge a battery pack 1010 of the energy storage device 240 within a time window.

As indicated in block 1420, the method includes determining, by the controller 220, whether the battery pack 1010 will remain within a predetermined operating temperature range while being charged or discharged within the time window.

As indicated in block 1430, the method includes responsive to the determination, the controller 220 either charging or discharging the battery pack 1010 pursuant to the request or denying the request.

As indicated in block 1440, the method includes determining, by the controller 220, a current temperature of the battery pack 1010.

As indicated in block 1450, the method includes determining, by the controller 220, a temperature rise from requirements associated with the request to charge or discharge the battery pack 1010.

As indicated in block 1460, the method includes denying, by the controller 220, the charge or discharge request upon determining that the battery pack 1010 will exceed the predetermined operating temperature range while being charged or discharged within the time window.

As indicated in block 1470, the method includes determining, by the controller 220, the current battery temperature by communicating with an energy storage device management system 1024 that is operationally coupled to the battery pack 1010.

As indicated in block 1480, the method includes determining, by the controller 220, a highest charge or discharge rate that would maintain the temperature of the battery pack 1010 within the predetermined operational temperature range and the charge or discharge time within the requested range.

As indicated in block 1490, the method includes delaying the charging or discharging upon determining there is insignificant time to charge or discharge the battery pack 1010 at the highest charge or discharge rate while maintaining the temperature of the battery pack 1010 within the predetermined operational temperature range.

As indicated in block 1500, the method includes determining, by the controller 220, while charging or discharging the battery pack 1010, that there is insufficient time to meet requirements in the request, and stopping the charging or discharging.

As indicated in block 1510, the method includes determining, by the controller 220, while charging or discharging the battery pack 1010, that the temperature rise in the battery pack 1010 would exceed the predetermined operating temperature range, and stopping the charging or discharging.

As indicated in block 1520, the method includes determining, by the controller 220, while charging or discharging the battery pack 1010, that there is insufficient time to meet the charging or discharging requirements in the request, and modifying the charging or discharging to meet the requirements in the request within the time window identified in the request.

As indicated in block 1530, the method includes determining, by the controller 220, while charging or discharging the battery pack 1010, that the battery pack 1010 will exceed the predetermined operating temperature range, and modifying the charging or discharging to meet the requirements in the request while keeping the battery pack 1010 within the predetermined operating temperature range.

As indicated in block 1540, the method includes continuously monitoring, by the controller 220, the current temperature of the battery pack 1010 throughout the charging or discharging of the battery pack 1010 for determining whether to stop or modify the charging or discharging of the battery pack 1010.

As indicated in block 1550, the method includes controlling, by the controller 220, cooling of the battery pack 1010 via liquid cooling or air cooling while charging or discharging the battery pack 1010 to maintain the battery pack 1010 within the predetermined operating temperature range.

The above disclosed process enables controlling the charging or discharging of the battery pack 1010. This ensures the battery pack 1010 operates within a desired temperature range. It can be appreciated that the system could be adjusted for optimized power conversion efficiency as long as battery cooling is aligned with the operational requirements of the air conditioning system.

As described above, embodiments can be in the form of processor-implemented processes and devices for practicing those processes, such as a controller 220 and/or the thermostat 260. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting on the scope of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the invention is not thus limited. Rather, the present disclosure can be modified to incorporate any number of variations, alterations, substitutions, combinations, sub-combinations, or equivalent arrangements not heretofore described, but which are within the scope of the invention. Additionally, while various embodiments have been described, it is to be understood that the invention may include only some of the described embodiments. Accordingly, the invention is not to be seen as limited by the foregoing description, but is only limited by the scope of the appended claims.

## Claims

1. An air conditioning system (100, 700) comprising:
a controller (220);
an energy storage device (240) including a battery pack (1010), wherein the energy storage device is operable to power the air conditioning system; and
an AC power bus (305) for connection the air conditioning system to an AC power grid (302) to selectively charge the battery pack;
wherein the controller is configured to:
receive a request to charge or discharge the battery pack within a time window;
determine whether the battery pack will remain within a predetermined operating temperature range while being charged or discharged within the time window, and
responsive to a determination, either charging or discharging the battery pack, pursuant to the request, or denying the request.

2. The air conditioning system of claim 1, wherein the controller is configured to determine a current temperature of the battery pack and determine a temperature rise from requirements associated with the request to charge or discharge the battery pack to deny the charge or discharge request upon determining that the battery pack will exceed the predetermined operating temperature range while being charged or discharged within the time window.

3. The air conditioning system of claim 1 or 2, wherein the controller is configured to determine a current battery temperature by communicating with an energy storage device management system (1024) that is operationally coupled to the battery pack.

4. The air conditioning system of any of claims 1-3, wherein the controller is configured to determine a highest charge or discharge rate that would maintain a temperature of the battery pack within a predetermined operational temperature range and the charge or discharge time within the requested range, and delaying the charging or discharging upon determining there is insufficient time to charge or discharge the battery pack at the highest charge or discharge rate while maintaining the temperature of the battery pack within the predetermined operational temperature range.

5. The air conditioning system of any of claims 1-4, wherein the controller is configured to determine, while charging or discharging the battery pack, that there is insufficient time to meet requirements in the request, and stopping the charging or discharging; and/or
wherein the controller is configured to determine, while charging or discharging the battery pack, that the temperature rise in the battery pack would exceed the predetermined operating temperature range, and stopping the charging or discharging.

6. The air conditioning system of any of claims 1-5, wherein the controller is configured to determine, while charging or discharging the battery pack, that there is insufficient time to meet the charging or discharging requirements in the request, and modifying the charging or discharging to meet the requirements in the request within the time window identified in the request; and/or
wherein the controller is configured to determine, while charging or discharging the battery pack, that the battery pack will exceed the predetermined operating temperature range, and modifying the charging or discharging to meet requirements in the request while keeping the battery pack within the predetermined operating temperature range.

7. The air conditioning system of any of claims 1-6, wherein the controller is configured to continuously monitor a current temperature of the battery pack throughout the charging or discharging of the battery pack for determining whether to stop the charging or discharging of the battery pack.

8. The air conditioning system of any of claims 1-7, wherein the battery pack is liquid cooled or air cooled during charging or discharging to maintain the predetermined operational temperature range of the battery pack.

9. A method of controlling a charging or discharging a battery pack (1010) of an energy storage device (240) that powers an air conditioning system (700), the method comprising:
receiving, by a controller (220) of the air conditioning system, a request to charge or discharge the battery pack of the energy storage device within a time window;
determining, by the controller, whether the battery pack will remain within a predetermined operating temperature range while being charged or discharged within the time window; and
responsive to a determination, the controller either charging or discharging the battery pack, pursuant to the request, or denying the request.

10. The method of claim 9, comprising:
determining, by the controller, a current temperature of the battery pack;
determining, by the controller, a temperature rise from requirements associated with the request to charge or discharge the battery pack; and
denying, by the controller, the charge or discharge request upon determining that the battery pack will exceed the predetermined operating temperature range while being charged or discharged within the time window.

11. The method of claim 9 or 10, comprising:
determining, by the controller, a current battery temperature by communicating with an energy storage device management system that is operationally coupled to the battery pack.

12. The method of any of claims 9-11, comprising:
determining, by the controller, a highest charge or discharge rate that would maintain a temperature of the battery pack within a predetermined operational temperature range and the charge or discharge time within the requested range; and
delaying the charging or discharging upon determining there is insufficient time to charge or discharge the battery pack at the highest charge or discharge rate while maintaining the temperature of the battery pack within the predetermined operational temperature range.

13. The method of any of claims 9-12, comprising:
determining, by the controller, while charging or discharging the battery pack, that there is insufficient time to meet requirements in the request, and stopping the charging or discharging; and/or
determining, by the controller, while charging or discharging the battery pack, that the temperature rise in the battery pack would exceed the predetermined operating temperature range, and stopping the charging or discharging.

14. The method of any of claims 9-13, comprising:
determining, by the controller, while charging or discharging the battery pack, that there is insufficient time to meet the charging or discharging requirements in the request, and modifying the charging or discharging to meet the requirements in the request within the time window identified in the request; and/or
determining, by the controller, while charging or discharging the battery pack, that the battery pack will exceed the predetermined operating temperature range, and modifying the charging or discharging to meet requirements in the request while keeping the battery pack within the predetermined operating temperature range.

15. The method of any of claims 9-14, comprising:
continuously monitoring, by the controller, a current temperature of the battery pack throughout the charging or discharging of the battery pack for determining whether to stop or modify the charging or discharging of the battery pack; and/or
controlling, by the controller, cooling of the battery pack via liquid cooling or air cooling while charging or discharging the battery pack to maintain the battery pack within the predetermined operating temperature range.
